# EUROPEAN PATENT SPECIFICATION

(11) **EP 0 466 219 B1**
(45) Date of publication and mention of the grant of the patent: **17.04.1996**
(21) Application number: 91201407.3
(22) Date of filing: 07.06.1991
(51) Int. Cl.: F16L 1/16, F16L 1/12

(54) **Pipeline with ground anchors**
Pipeline mit Grundankern
Conduite avec ancrages dans le sol

(30) Priority: 29.06.1990 NL 9001484
(43) Date of publication of application: 15.01.1992
(73) Proprietor: SUBMARINE PIPELINE SPOILER B.V., NL-3811 ED Amersfoort (NL)
(72) Inventor: De Vries, Jacob Simon Pieter, NL-3811 ED Amersfoort (NL); Schoonebeek, Wilhelmus Leonardus Maria, NL-4845 PH Wagenberg (NL)
(74) Representative: Jilderda, Anne Ayolt

(56) References cited:
- EP-A- 0 020 232
- GB-A- 2 137 721

## Description

The invention relates to pipelines, for use on the bottom of the sea to transport gas or oil, provided with elongated protrusions on their outer surfaces, about transverse to the length of the pipeline and extending over at least part of the circumference of the pipe and positioned at distances from each other.

Such pipes are for instance used to transport gas and/or oil on the continental shelf. For safety reasons, such pipes should be dug into the bottom of the sea and should stay dug in there. A digging depth minimally prescribed by the authorities for such pipes is 20 centimeters plus the pipe diameter.

From GB-A-2 137 721 it is known to provide such pipes at their outer walls with protruding parts that make a pipe dig itself into the bottom of the sea under the influence of the sea current.

With such pipelines, the difficulty often occurs, that as a consequence of the relatively high temperatures of the medium to be transported, the pipe starts 'working'. The pipe will expand because of the heat, which may lead to its 'bulging'; it will show the so-called 'upheaval-buckling'. This 'bulging' occurs uncontrolledly and sometimes even leads to a kink in the pipe. The chance that said 'upheaval buckling' occurs, should be as small as possible, and should preferably be reduced to nil.

Various possibilities to solve the problem have been proposed and tested. For instance, the use of a rough outer surface of a pipe, such as sand applied to the surface by means of glue. The grip of the pipe on the subsoil will then be improved, and the chance of 'working' will hence become smaller. The result, however, was insufficient.

Another solution has been looked for in laying the pipeline in a sine shape, flat on the seabed. Because of the sine shape, the occurring expansion forces would find their way out sideways instead of upwards. This, however, did not either lead to the desired result: the pipe 'jumped' here and there again upwards. A further disadvantage was that when a flow occurs through the pipe, this will show a tendency to swing.

The invention now provides a solution for said problems and a pipeline according to the invention thereto shows the characteristic that the protrusions are the upright walls of trough-shaped constructions with their bottoms fixed on and around the circumference of the outer surface of the pipe, being closed or open along part of that circumference, the upright walls protruding each, all along their length, about equally high outside the outer surface of the pipeline and the constructions being positioned at about equal distances apart from each other on the outer surface, the combination of height and distance being determined by the differences in temperature, occurring in the pipeline, by the dimensions of the pipeline and by the local composition of the soil.

It has surprisingly turned out that an anchorage of the pipe by means of such cross pipe protrusions apparently leads thereto that tensions occurring in the external wall as a consequence of heating, therein occur equally divided along the length of that wall. As a result of this steadiness of the division, it is prevented that said upheaval buckling occurs. In many cases, said ground anchors (the walls of the trough-shaped constructions) will not be around the whole circumference of the pipe, this in order to make the unwinding of the pipe possible in an easy way. Across part of the surface, for instance over an angle of 60°, this will then be smooth.

The use of transverse protrusions on a pipeline is known from the already cited GB-A-2 137 721, page 3, lines 114 and further. They serve the purpose to bury a pipeline in the soil under the influence of an outside water flow. As they do not surround the pipe, do not have upright walls with substantially the same height all along their length and as they are not provided all along the length of the pipeline on equal distances from each other, they will not obviate the problem to be solved: to prevent the upheaval buckling by spreading tensions evenly along the wall of the pipe.

Of course also are known pipes with corrugated walls, the corrugations forming sort of protrusions on equal distance from each other. As however that type of protrusions does not have any upright walls and, besides, they run very close together, of course also those protrusions do not yield the desired result.

Naturally, specific demands will have to be put to the protrusions, if they have to meet the objective intended. Those demands depend on the situation occurring in a concrete case. In particular, in case of use with a certain large difference of temperature, it applies to the height of such a ground anchor and to the mutual distance, seen in the longitudinal direction of the pipe, that these should be tuned to the dimensions of the pipe and the composition of the ground. It thus appeared that for a pipeline with a wall-thickness of 1.4 centimeters and a diameter of 30 centimeters, through which gas of a temperature of 80 C° was transported and that was dug into a substratum of sand with an average grain size of 175 µ, a height of the ground anchor of 4 centimeters in combinations with a mutual distance of 30 centimeters, was very satisfactory.

Although it is preferred to realize the ground anchors as trough-shaped constructions with upright walls, lying with their bottoms against the outer surface of the pipe, either as separate rings, or as spirals.

Pipelines are in particular satisfactory when they are provided with ground anchors according to the invention, in combination with a fin running in the longitudinal direction of the pipe: a spoiler. The natural digging in of the pipe obtained with the help of the spoiler makes that the anchorage of the pipe, as intended with the invention, will be easier and better realized.

A further advantage of last-mentioned combination is, that a spoiler is usually kept in its place by means of strips around the pipe. In an embodiment of the pipeline according to the invention, the strips, used to keep the spoiler at its place, may simultaneously be used to fix the ground anchors against the pipe, by positioning them in the annular troughs, along the bottoms therof.

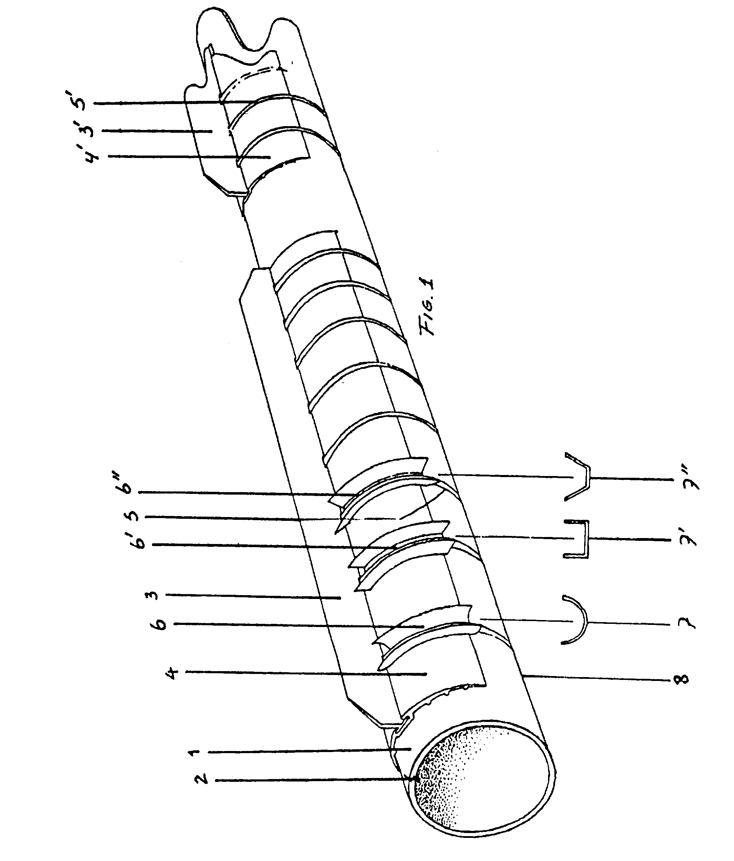

The invention will be further explained by means of the drawing, in which is shown in perspective a pipeline according to the invention with trough-shaped ground anchors and provided with a spoiler.

In the drawing, 1 is a pipeline with a wall-thickness 2. On this pipe 1, spoilers 3 and 3' respectively are mounted. Mounting of the spoilers has been realized by means of seats 4 and 4' respectively that grab across part of the outer surface of pipe 1. Spoiler and seat are kept in place by means of strips 5 and 5' respectively.

With 6, 6' and 6" the ground anchors are indicated. In the drawn example as trough-shaped parts, grabbing around the outer surface of pipe 1 - the bottom of the pipe is not fully encircled by the ground anchors, so that they do not form any impediment in case of the uncoiling of the pipe. In general, however, the ground anchors will grab across the pipe over more than 180° in order to guarantee a more secure fastening.

The ground anchors drawn are all trough-shaped, with trough sections 7, 7' and 7'': 7 (6) is a round trough; 7' (6') is a trough with a rectangular cross-section and 7'' (6'') is a trough with obliquely standing walls.

In the example drawn, the strips 5, with which the spoiler 3 is kept in its place, are also fastening the trough-shaped ground anchors 6 around the surface of pipe 1.

## Claims

1. Pipeline for use on the seabed for the transport of gas or oil, provided with elongated protrusions at its outer surface, about transverse to the length of the pipeline and extending over at least part of the circumference of the pipe and positioned at distances from each other,
characterized in that said protrusions are the upright walls of trough-shaped constructions with their bottoms fixed on and around the circumference of the outer surface of the pipe being closed or open along part of that circumference, the upright walls protruding each, all along their length, about equally high outside the outer surface of the pipeline and the constructions being positioned at about equal distances apart from each other on the outer surface, the combination of height and distance being determined by the differences in temperature, occurring in the pipeline, by the dimensions of the pipeline and by the local composition of the soil.

2. Pipeline according to claim 1, provided at its surface with fins running in the longitudinal direction of the pipe, so called 'spoilers', the spoilers being fixed thereto by means of strips around the pipe, wherein
the trough-shaped constructions are fixed to the outer surface of the pipeline by means of said strips around the pipe, running in the troughs along the bottoms.

## Patentansprüche

1. Pipeline zur Verwendung auf dem Meeresboden fur den Transport von Gas oder Öl, die mit länglichen Vorsprüngen an ihrer Außenfläche versehen ist, die sich ungefähr quer zur Länge der Pipeline und über zumindest einen Teil des Umfangs der Leitung erstrecken und in bestimmten Abständen zueinander angebracht sind,
dadurch gekennzeichnet, daß die Vorsprünge die senkrechten Wände von trogförmigen Aufbauten sind, die mit ihrer Unterseite auf und um den Umfang der Außenfläche der Leitung herum befestigt sind, wobei sie geschlossen sind oder entlang einem Teil dieses Umfangs offen sind, die senkrechten Wände ragen jeweils über ihre gesamte Länge ungefähr gleich hoch über die Außenfläche der Pipeline nach außen und die Aufbauten sind an der Außenfläche in ungefähr gleichen Abständen voneinander angeordnet, die Kombination von Höhe und Abstand werden durch die in der Pipeline auftretenden Temperaturunterschiede, die Abmessungen der Pipeline und die örtliche Beschaffenheit des Bodens bestimmt.

2. Pipeline nach Anspruch 1, die an ihrer Oberfläche mit in Längsrichtung der Leitung verlaufenden Stegen, sogenannten "Spoilern" versehen ist, die Spoiler mit Hilfe von um die Leitung gelegten Streifen an ihr befestigt sind, wobei die trogförmigen Aufbauten an der Außenfläche der Pipeline mit Hilfe von besagten Streifen um die Leitung befestigt werden, die in den Trögen entlang der Unterseite verlaufen.

## Revendications

1. Une conduite, pour une utilisation au fond de la mer, afin de tansporter du gaz ou du pétrole, munie de saillies allongées sur sa surface extérieure, environ transversales par rapport à la longueur de la conduite et s'étendant sur au moins une partie de la circonférence de la conduite et situées à une certaine distance l'une de l'autre,
caractérisée en ce que ces saillies sont les parois verticales de constructions en forme de creux avec leurs bases fixées sur et autour de la circonférence de la surface extérieure de la conduite, fermées ou ouvertes sur une partie de cette circonférence, les parois verticales dépassant chacune, sur toute leur longueur, environ d'une même hauteur au dehors de la surface extérieure de la conduite, et les constructions étant positionnées à des distances environ égales l'une de l'autre sur la surface extérieure, la combinaison de la hauteur et de la distance étant déterminée par les différences de température survenant dans la conduite, par les dimensions de la conduite et par la composition locale du sol.

2. Une conduite d'après la revendication 1, munie à sa surface de dérives s'étendant dans la direction longitudinale de la conduite, appelées 'ailerons', les ailerons étant fixés au moyen de bandes autour de la conduite, les constructions en forme de creux étant fixées à la surface extérieure de la conduite au moyen de ces bandes autour de la conduite, qui s'étendent dans les creux le long de leurs fonds.
